# EUROPEAN PATENT APPLICATION

(11) **EP 3 348 853 A1**
(43) Date of publication of application: **18.07.2018**
(21) Application number: 16844564.1
(22) Date of filing: 05.07.2016
(51) Int. Cl.: F16D 41/06, F16D 41/064

(54) **ONE-WAY CLUTCH CAPABLE OF BI-DIRECTIONAL ROTATION**

(30) Priority: 09.09.2015 KR 20150127671
(71) Applicant: Ji, Sang Hun, Seongnam-si, Gyeonggi-do 13173 (KR)
(72) Inventor: Ji, Sang Hun, Seongnam-si, Gyeonggi-do 13173 (KR)
(74) Representative: Haseltine Lake LLP
(86) International application number: PCT/KR2016/007264
(87) International publication number: WO 2017/043744

(57) **Abstract**

The present disclosure relates to a one-way clutch in which a forward key (20b) of an output part (12) is locked and a bi-directional rotation of the output part (12) can be controlled by means of an input part (13).

That is, the present disclosure relates to a one-way clutch comprising: a fixation part (11) provided at either an inner side or an outer side of a clutch part; an output part (12) provided at a position corresponding to the fixation part (11); an input part (13) provided between the fixation part (11) and the output part (12); and a forward key means (21) provided on the output part (12) to key-lock the output part (12) in a forward direction.

Accordingly, the present disclosure comprises an input part (13) provided between the fixation part (11) and the output part (12); and a forward key means (21) for key-locking the output part (12) in the forward direction, such that the forward rotation of the output part (12) is key-locked by means of the forward key means (21) and the key locking of the forward key means (21) is released by means of the input part (13), so that the output part (12) is rotated in the forward direction by means of the input part (13) and the output part (12) is rotated in the reverse direction by means of the input part (13). As such, the present disclosure has an effect wherein the output part (12) is rotated in the forward and reverse directions by means of the input part (13).

## Description

### BACKGROUND

### Technical field

The present disclosure relates to a one-way clutch, in which the one-way clutch includes a fixation part provided at either an inner side or an outer side of a clutch part; an output part provided at a position corresponding to the fixation part; an input part provided between the fixation part and the output part; and a forward key means provided on the output part to key-lock the output part in a forward direction, whereby the output part is forward key-locked and bi-directional rotation of the output part is controlled by means of the input part.

It is another object of the present disclosure to provide a reverse key means provided in an opposite direction to the forward key means to key-lock the output part in the reverse direction, whereby the output part is key-locked in the forward and reverse directions, and bi-directional rotation of the output part is controlled by means of the input part.

It is another object of the present disclosure to provide a key means including a key groove formed in the output part and gradually decreasing in depth along an opposite direction to the direction of rotation control, and a key received in the key groove and released from locking state by unlocking operation of the input part, whereby the output part is locked precisely.

It is still another object of the present disclosure to provide a release lever between the key of the key means and the input part, which pushes the key in the key groove and rotates the output part in the revere direction, whereby the output part is key-locked precisely and easily.

It is still another object of the present disclosure to provide an elastic support for elastically supporting the key in the key groove, whereby the key is key-locked precisely.

### BACKGROUND ART

Generally, a one-way clutch transmits a rotational force in only one direction while idling in the other direction.

Representative example of the one-way clutch described above can be found in the rear wheel of a bicycle, in which the sprocket wheel of the rear wheel is rotated by the chain pulled by stepping on the pedal to cause the bicycle to roll, while the rear wheel idles when the pedal is not stepped.

Further, the one-way clutch is employed in an automatic transmission of an automobile.

The one-way clutch described above includes an output part that outputs a rotational force, an input part that receives an inputted rotational force, and a one-way binding means provided between the input part and the output part.

The one-way binding means described above includes a one-way key provided at either the input part or the output part to lockingly bind the output part or the input part according to the rotational force inputted to the input part, thus transmitting the rotational force of the input part to the output part.

However, the conventional one-way clutch as described above has a shortcoming that the output part can be rotated only in one direction by means of the input part such that it is impossible to control a rotation of the output part in the other direction by means of the input part.

### DISCLOSURE

### Technical Problem

Therefore, it is an object of the present disclosure to solve the problem of the conventional one-way clutch described above, i.e., to solve the problem that the output part can be rotated only in one direction by means of the input part and that it is impossible to control the rotation of the output part in the other direction by means of the input part.

### Technical Solution

Accordingly, the present disclosure provides a one-way clutch including: a fixation part provided at either an inner side or an outer side of a clutch part; an output part provided at a position corresponding to the fixation part; an input part provided between the fixation part and the output part; and a forward key means provided on the output part for key-locking the output part in a forward direction.

Further, the present disclosure is provided with a reverse key means formed in an opposite direction to the forward key means to key-lock the output part in the reverse direction.

Further, the present disclosure is provided with a key means including a key groove formed in the output part and gradually decreasing in depth along an opposite direction to the direction of rotation control, and a key received in the key groove and released from locking state by the unlocking operation of the input part.

Further, the present disclosure is provided with a release lever between the key of the key means and the input part, which pushes the key in the key groove and rotates the output part in the revere direction.

Further, the present disclosure is provided with an elastic support for elastically supporting the key in the key groove.

### Advantageous Effects

Accordingly, the present disclosure is provided with an input part between the fixation part and the output part, and a forward key means for key-locking the output part in the forward direction, and thus has an effect wherein the forward rotation of the output part is key-locked by means of the forward key means and the key-locking of the forward key means is released by means of the input part such that the output part is rotated in the forward direction by means of the input part, while the output part is rotated in the reverse direction by means of the input part, and accordingly, the output part is rotated in the forward and reverse directions by means of the input part.

Further, the present disclosure is provided with a reverse key means for key locking the output part in the reverse direction and the output part is key-locked in the forward direction and also key-locked in the reverse direction, and thus has an effect wherein the rotation of the output part is controlled precisely.

Further, the present disclosure is provided with a release lever that pushes a key in a key groove and rotates the output part in the reverse direction and thus has an effect wherein, when the key lock is released by means of the input part, the key lock is released smoothly and precisely by the release push of key by the release lever and the release rotation of the output part by the release lever.

Further, the present disclosure is provided with an elastic support for elastically supporting the key in the key groove, and thus has an effect wherein the output part is key-locked by means of the key means precisely.

### BRIEF DESCRIPTION OF THE DRAWINGS

The above and other objects, features and advantages of the present disclosure will become more apparent to those of ordinary skill in the art by describing in detail exemplary embodiments thereof with reference to the accompanying drawings, in which:

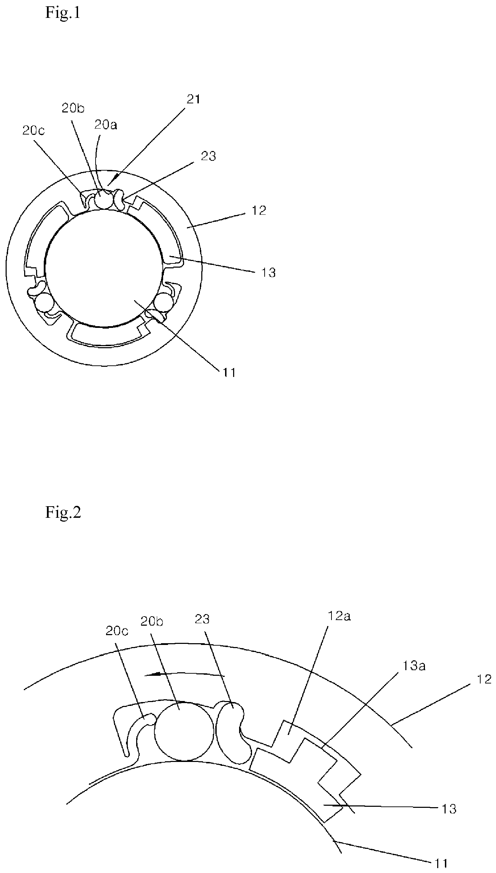

FIG. 1 is an exemplary view showing a unidirectional application according to an embodiment of the present disclosure, in which a fixation axis is located at the center, an output axis is located on an outer side, and an input axis is located in the middle;
FIG. 2 is an exemplary view showing a unidirectional application according to an embodiment of the present disclosure, in which a fixation axis is located at the center, an output axis is located on an outer side, and an input axis is located in the middle and rotation is fixed in the absence of an application of a rotational force to the input part;

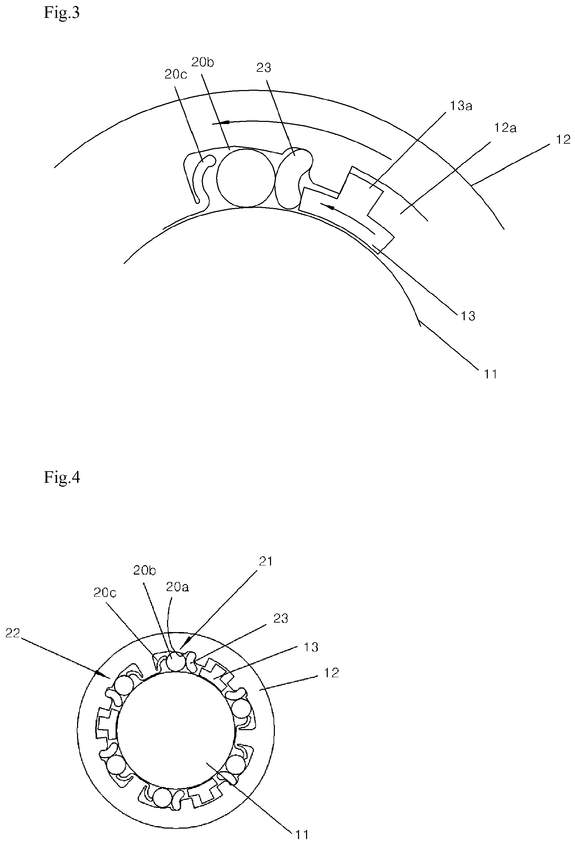

FIG. 3 is an exemplary view according to an embodiment of the present disclosure in which, from a state in which a fixation axis is located at the center, an output axis is located on an outer side, and an input axis is located in the middle, the output part is rotated in the reverse direction as the key is released in response to a reverse rotational force applied to the input part;
FIG. 4 is an exemplary view showing a bidirectional application according to an embodiment of the present disclosure, in which a fixation axis is located at the center, an output axis is located on an outer side, and an input axis is located in the middle;

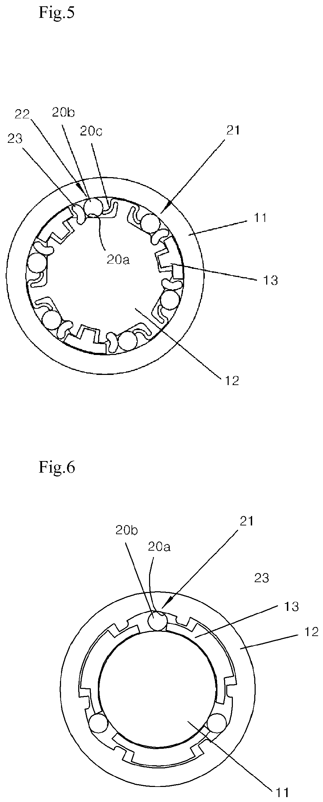

FIG. 5 is an exemplary view showing a bidirectional application according to an embodiment of the present disclosure, in which an output axis is located at the center, a fixation axis is located on an outer side, and an input axis is located in the middle;
FIG. 6 is an exemplary view showing an application of one key according to an embodiment of the present disclosure, in which a fixation axis is located at the center, an output axis is located on an outer side, and an input axis is located in the middle;

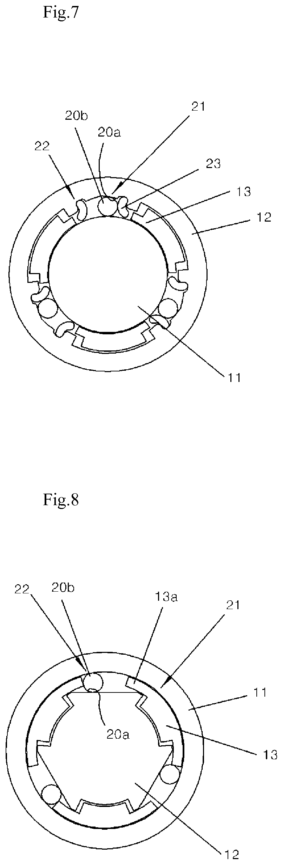

FIG. 7 is an exemplary view showing an application of one key according to an embodiment of the present disclosure, in which an output axis is located at the center, a fixation axis is located on an outer side, and an input axis is located in the middle;
FIG. 8 is an exemplary view showing an application of one key according to an embodiment of the present disclosure, in which a fixation axis is located at the center, an output axis is located on an outer side, and an input axis is located in the middle, with release levers provided on both sides; and

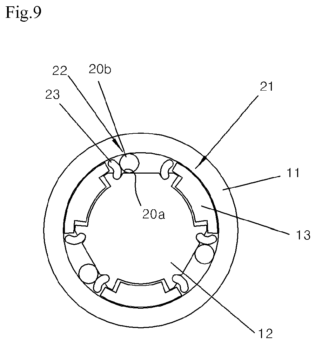

FIG. 9 is an exemplary view showing an application of one key according to an embodiment of the present disclosure, in which an output axis is located at the center, a fixation axis is located on an outer side, and an input axis is located in the middle, with release levers provided on both sides.

### BEST MODE

The terms and words used in the present disclosure and claims should not be construed as limited to ordinary or dictionary meanings, but should be interpreted as the meaning and concept that suit the technical concept of the present disclosure in accordance with the principle that the inventor can appropriately define the concept of the term in order to explain the inventive concept in the best way as possible.

Accordingly, while the embodiments described herein and the configurations shown in the drawings are the most preferred embodiments of the present disclosure, these do not represent all of the technical ideas of the present disclosure, and therefore, it should be understood that various equivalents and modifications are possible as a replacement to the above.

Hereinafter, the present disclosure will be described in detail with reference to the accompanying drawings.

The present disclosure provides a one-way clutch that transmits both the forward and reverse rotational forces of the input part to the output part.

That is, the present disclosure relates to a one-way clutch that may include: a fixation part 11 provided at either an inner side or an outer side of a clutch part; an output part 12 provided at a position corresponding to the fixation part 11; an input part 13 provided between the fixation part 11 and the output part 12; and a forward key means 21 provided on the output part 12 to key-lock the output part 12 in the forward direction.

Further, in another embodiment of the present disclosure, a reverse key means 22 may be provided in an opposite direction to the forward key means 21 to key-lock the output part 12 in the reverse direction.

Further, in still another embodiment of the present disclosure, a key means may include a key groove 20a formed in the output part 12 and gradually decreasing in depth along an opposite direction to the direction of rotation control, and a key 20b received in the key groove 20a and released from locking state by the unlocking operation of the input part 13.

Further, the key 20b may be provided in various shapes such as spherical, cylindrical or wedge shapes, which can provide a friction lock or a wedge lock between the fixation part 11 and the key groove 20a of the output part 12.

Meanwhile, in an embodiment where both the forward key means 21 and the reverse key means 22 are employed, the key means may include two key grooves 20a provided for the forward direction and reverse direction, respectively, and one key 20b provided between the two key grooves 20a.

Further, in still another embodiment of the present disclosure, a release lever 23 may be provided to unlock the key 20b by pushing, by means of the input part 13, the key 20b between the key 20b of the key means and the input part 13.

The release lever 23 may be configured such that one end of the release lever 23 is rotatably supported by the output part 12 and the opposite side to the rotatably supported side is pressed by the input part 13, and the center part is in contact with the key 20b under the pressing force of the input part 13.

It is preferable that the release lever 23 has such a length that it 23 is not interfered with the fixation part 11 when the releasing lever 23 stands upright in the releasing operation.

Further, in still another embodiment of the present disclosure, an elastic support 20c may be provided for elastically supporting the key 20b in the key groove 20a.

The elastic support 20c may be formed as an elastic piece protruding from the key groove 20a.

The elastic support 20c may be provided as a key 20b spring for elastically supporting the key 20b received in the key groove 20a.

Further, in an embodiment of the present disclosure, a driving projection 13a may protrude from the input part 13 toward the output part 12 and a protrusion restricting groove 12a may be formed on the corresponding output part 12 in a circumferential direction with a predetermined width, whereby the output part 12 can be stably driven by means of the input part 13.

Hereinafter, the operation of the present disclosure will be described.

In an embodiment employing the one-way clutch described above including a fixation part 11 provided at either an inner side or an outer side of a clutch part; an output part 12 provided at a position corresponding to the fixation part 11; an input part 13 provided between the fixation part 11 and the output part 12; and a forward key means 21 provided on the output part 12 to key-lock the output part 12 in the forward direction, the rotation of the output part is key-locked in the forward direction by means of the forward key means and the key-locking of the forward key means is released by means of the input part such that the output part is rotated in the forward direction by means of the input part, while the output part is rotated in the reverse direction by means of the input part, and accordingly, the output part is rotated in the forward and reverse directions by means of the input part.

Further, in an embodiment of the present disclosure, when the reverse key means 22 is provided in an opposite direction to the forward key means 21 to key-lock the output part 12 in the reverse direction, the rotation of the output part 12 by means of the input part 13 can be rotationally driven in both directions.

Further, in still another embodiment of the present disclosure, when the release lever 23 is provided to unlock the key 20b by pushing, by means of the input part 13, the key 20b between the key 20b of the key means and the input part 13, the key 20b locked in the key groove 20a is smoothly released by means of the release lever 23, so that the operation is stably performed.

Further, in an embodiment of the present disclosure, when the elastic support 20c for elastically supporting the key 20b is provided in the key groove 20a, the key 20b is precisely constrained in the key groove 20a, and accordingly, the rotation of the output part 12 can be controlled precisely.

Further, in an embodiment of the present disclosure, by employing the driving projection 13a protruding from the input part 13 toward the output part 12 and the protrusion restricting groove 12a formed on the corresponding output part 12 in a circumferential direction with a predetermined width, the output part 12 can be stably driven by means of the input part 13.

## Claims

1. A one-way clutch, comprising:
a fixation part (11) provided at either an inner side or an outer side of a clutch part; an output part (12) provided at a position corresponding to the fixation part (11); an input part (13) provided between the fixation part (11) and the output part (12); and a forward key means (21) provided on the output part (12) to key-lock the output part (12) in a forward direction, wherein the key means comprises a key groove (20a) formed in the output part (12) and gradually decreasing in depth along an opposite direction to a direction of rotation control, and a key (20b) received in the key groove (20a) and released from locking state by unlocking operation of the input part (13); and
a release lever (23) configured to unlock the key (20b) by pushing, by means of the input part (13), the key (20b) between the key (20b) of the key means and the input part (13),
wherein the release lever (23) is configured such that one end of the release lever is rotatably supported by the output part (12) and an opposite side to the rotatably supported side is pressed by the input part (13), and a center part is in contact with the key (20b) under pressing force of the input part (13).

2. The one-way clutch of claim 1, comprising a reverse key means (22) provided in an opposite direction to the forward key means (21) to key-lock the output part (12) in a reverse direction.

3. The one-way clutch of claim 1, wherein the key means comprises two key grooves (20a) provided for forward and reverse directions, respectively, and one key (20b) provided between the two key grooves (20a).

4. The one-way clutch of claim 1, comprising an elastic support (20c) for elastically supporting the key (20b) in the key groove (20a).

5. The one-way clutch of claim 1, comprising a driving projection (13a) protruding from the input part (13) toward the output part (12), and a protrusion restricting groove (12a) formed on a corresponding output part (12) in a circumferential direction with a predetermined width, whereby the output part (12) is stably driven by means of the input part (13).

6. The one-way clutch of claim 1, wherein the key (20b) is formed in a spherical shape.

7. The one-way clutch of claim 1, wherein the key (20b) is formed in a cylindrical shape.
